# EUROPÄISCHE PATENTSCHRIFT

(11) **EP 1 729 006 B1**
(45) Veröffentlichungstag und Bekanntmachung des Hinweises auf die Patenterteilung: **06.08.2008**
(21) Anmeldenummer: 06112342.8
(22) Anmeldetag: 07.04.2006
(51) Int. Cl.: F02M 61/16

(54) **Filteranordnung mit einem oberflächenstrukturierten Stabfilter**
Filter arrangement with edge filter with structured surface
Dispositif de filtration à filtre-tige ayant une surface structurée

(30) Priorität: 03.06.2005 DE 102005025527
(43) Veröffentlichungstag der Anmeldung: 06.12.2006
(73) Patentinhaber: ROBERT BOSCH GMBH, 70442 Stuttgart (DE)
(72) Erfinder: Ferraro, Giovanni, 71642, Ludwigsburg (DE); Uhlmann, Dietmar, 71404, Korb (DE)

(56) Entgegenhaltungen:
- EP-A- 0 616 828
- EP-A- 1 055 815
- WO-A-20/06049598
- DE-A1- 10 307 529
- GB-A- 2 168 616

## Beschreibung

### Stand der Technik

Die Erfindung betrifft eine Filteranordnung nach dem Oberbegriff von Patentanspruch 1 sowie eine Filteranordnung nach dem Oberbegriff von Patentanspruch 5.

Bei einer solchen, jeweils aus der GB-A-2 168 616 bekannten Filteranordnung ist im Kraftstoff-Zulaufkanal eines Kraftstoffeinspritzsystems ein Stabfilter eingepresst, der mehrere Längsnuten aufweist, die abwechselnd zur einen oder zur anderen Stirnseite des Stabfilters offen sind. Die Mantelfläche des Stabfilters weist Umfangsnuten auf, die die Längsnuten miteinander verbinden und zusammen mit der Kanalwand Filterspalte bilden, in denen im Kraftstoff mitgeführte Partikel zurückgehalten werden.

### Vorteile der Erfindung

Die erfindungsgemäßen Filteranordnungen eines Kraftstoffeinspritzsystems für Brennkraftmaschinen mit den Merkmalen des Patentanspruchs 1 bzw. des Patentanspruchs 5 hat demgegenüber den Vorteil, dass die in den Filterspalten des Stabfilters zurückgehaltenen Partikel effektiver zerkleinert werden, und zwar ohne Erhöhung des Drosselwiderstands des Stabfilters. Entsprechend zerkleinerte und ausreichend kleine Partikel können dann im Kraftstoffeinspritzsystem während der Einspritzung düsenseitig ausgespült werden.

Weitere Vorteile und vorteilhafte Ausgestaltungen des Gegenstands der Erfindung sind der Beschreibung, der Zeichnung und den Ansprüchen entnehmbar.

### Zeichnungen

Ausführungsbeispiele der erfindungsgemäßen Filteranordnung sind in den Zeichnungen dargestellt und in der nachfolgenden Beschreibung näher erläutert. Es zeigen:
- Fig. 1: eine Seitenansicht der erfindungsgemäßen Filteranordnung mit einem in einem Kraftstoff-Kanal angeordneten Stabfilter;
- Fig. 2: die Abwicklung der oberflächenstrukturierten Mantelfläche des Stabfilters von Fig. 1;
- Fign. 3a-3c: verschiedene Modifikationen der oberflächenstrukturierten Mantelfläche des Stabfilters;
- Fig. 4: eine andere Ausführungsform des erfindungsgemäßen Stabfilters in einer Seitenansicht (Fig. 4a) und in einer Abwicklung seiner oberflächenstrukturierten Mantelfläche (Fig. 4b);
- Fig. 5: eine weitere Ausführungsform des erfindungsgemäßen Stabfilters in einer Seitenansicht (Fig. 5a) und in einer Abwicklung seiner oberflächenstrukturierten Mantelfläche (Fig. 5b); und
- Fig. 6: eine weitere Ausführungsform des erfindungsgemäßen Stabfilters in einer Seitenansicht (Fig. 6a) und in einer Abwicklung seiner oberflächenstrukturierten Mantelfläche (Fig. 6b).

### Beschreibung der Ausführungsbeispiele

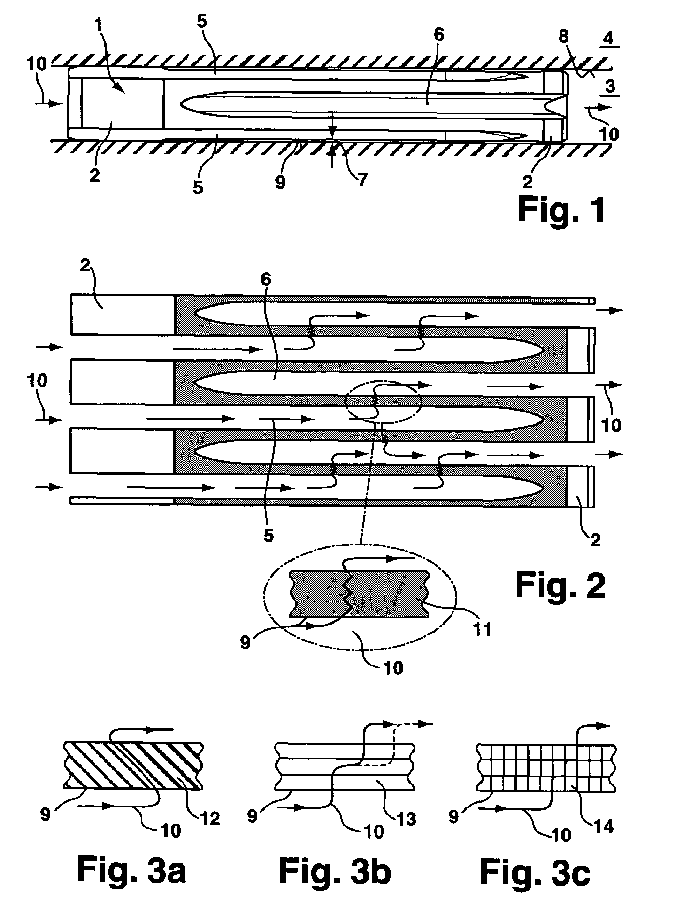

Der in **Fig. 1** gezeigte Stabfilter **1** dient beispielsweise zum Filtern des einem Kraftstoffeinspritzventil zugeführten Kraftstoffs. An beiden Enden weist der Stabfilter 1 jeweils einen Führungsabschnitt **2** auf, dessen Durchmesser etwas größer als im mittleren Bereich des Stabfilters 1 ist. Wenn der Stabfilter 1 in einen Kraftstoff-Zulaufkanal **3** eines Druckrohrstücks **4** eingeführt wird, bilden die Führungsabschnitte 2 mit dem Zulaufkanal 3 eine Spielpassung. Genauer gesagt, bildet der in Fig. 1 linke Führungsabschnitt 2 einen Pressbund, über den der Stabfilter 1 in den Zulaufkanal 3 eingepresst ist.

In der zylindrischen Mantelfläche des Stabfilters 1 sind zwei Gruppen von axial einseitig offenen Längsnuten **5, 6** vorgesehen. Die erste Gruppe weist drei gegeneinander jeweils um 120° in Umfangsrichtung versetzt angeordnete Längsnuten (Zuströmnuten) 5 auf, die von der linken Stirnfläche des Stabfilters 1 ausgehen. Die zweite Gruppe weist drei zu diesen Längsnuten 5 jeweils um 60° versetzt angeordnete Längsnuten (Abströmnuten) 6 auf, die in die rechte Stirnfläche des Stabfilters 1 münden. Wenn der Stabfilter 1 in den Zulaufkanal 3 eingeführt ist, kann Kraftstoff nicht mehr auf direktem Weg durch den Zulaufkanal 3 strömen, sondern muss durch mehrere Filterspalten **7** hindurchströmen, die zwischen Stabfilter 1 und Kanalwand **8** entstehen. Die Weite dieser Filterspalten 7 legt die maximale Größe von Verschmutzungen oder Fremdkörpern im Kraftstoff fest, die den Stabfilter 1 passieren können. Größere Partikel werden vom Stabfilter 1 zurückgehalten, so dass diese Partikel nicht zum Kraftstoffeinspritzventil gelangen und demzufolge dort auch keine Funktionsstörungen verursachen können. Der Zulaufkanal 3 erfährt durch im Kraftstoffeinspritzsystem auftretende Druckpulsationen eine variierende radiale Aufweitung, wodurch in den Filterspalten 7 befindliche bzw. zurückgehaltene Partikel zerkleinert bzw. zertrümmert werden. Um diese Partikelverkleinerung zu optimieren, sind die die Filterspalten 7 definierenden Oberflächenabschnitte **9** des Stabfilters 1 strukturiert, wie im Folgenden näher beschrieben wird. Alternativ oder zusätzlich kann auch die Kanalwand 8 strukturiert sein.

In **Fig. 2** sind die möglichen Strömungswege des Kraftstoffs in und um den Stabfilter 1 herum in einer abgewickelten Darstellung der Mantelfläche des Stabfilters 1 andeutungsweise dargestellt. Die Pfeile **10** deuten an, wie der Kraftstoff durch die Längsnuten 5 in einen durch Stabfilter 1 und Zulaufkanal 3 gebildeten Kanal einströmt. Da die Längsnuten 5 sich nicht bis zur rechten Stirnfläche des Stabfilters 1 erstrecken, muss der Kraftstoff durch die Filterspalten 7, die durch den strukturierten Oberflächenabschnitt 9 des Stabfilters 1 und die Kanalwand 8 gebildet sind, hindurchströmen und gelangt so in die Längsnuten 6. Dort sammelt sich der Kraftstoff wieder und strömt über die rechte Stirnfläche aus dem Stabfilter 1 heraus.

In Fig. 2 ist der strukturierte Oberflächenabschnitt 9 des Stabfilters 1 mit einem Links-Rechts-Rändel **11** versehen. In **Fig. 3a** ist der strukturierte Oberflächenabschnitt 9 des Stabfilters 1 mit einem Rechtsrändel **12,** in **Fig. 3b** mit einem Rändel **13** mit achsparallelen Riefen und in **Fig. 3c** mit einem Kreuzrändel **14** versehen. Entsprechend der Oberflächenstrukturierung des Oberflächenabschnitts 9 werden die Filterspalten 7 unterschiedlich durchströmt und formen die Bewegungsrichtung des Kraftstoffs durch den Stabfilter 1. Beispielsweise kann der Links-Rechts-Rändel zu einer "Zickzack"-Bewegung des Kraftstoffs, der Rechtsrändel 12 zu einer Rückwärtsbewegung des Kraftstoffs und die Rändel 13, 14 zu einer "Stufen"-Bewegung des Kraftstoffs in den Filterspalten 7 führen.

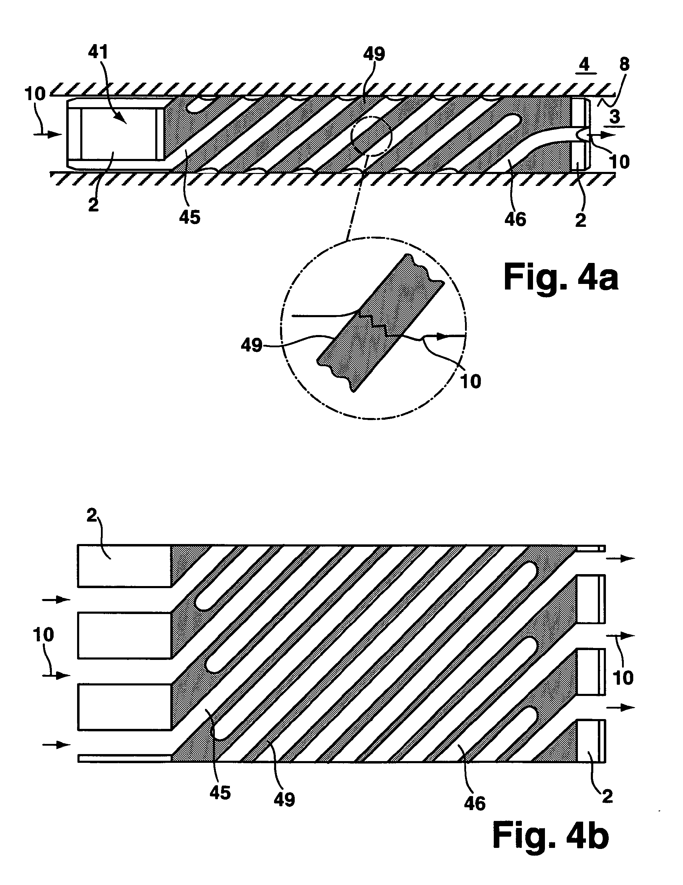

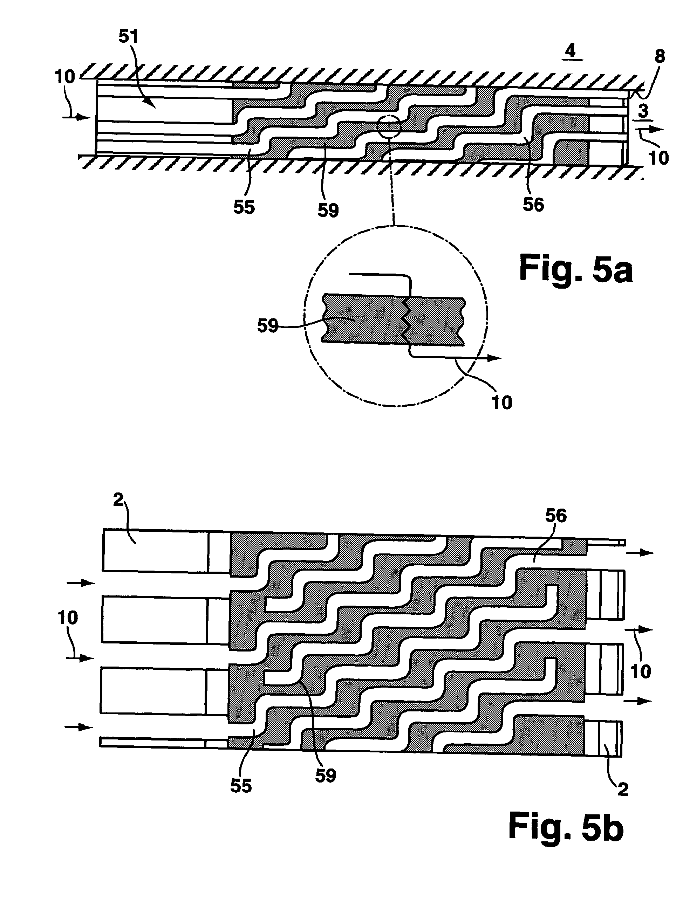

Vom Stabfilter 1 der Fign. 1 und 2 unterscheiden sich die in **Fig. 4** und **Fig. 5** gezeigten Stabfilter **41, 51** allein dadurch, dass die Nuten **45, 46** wendelförmig bzw. die Nuten **55, 56** treppenförmig zur Längsrichtung verlaufen. Die strukturierten Oberflächenabschnitte auf der Mantelfläche der Stabfilter 41, 51, durch die jeweils zwei unterschiedliche Nuten 45, 46 bzw. 55, 56 voneinander getrennt sind, sind mit **49** bzw. **59** bezeichnet. Während der wendelförmige Nutverlauf der Nuten 45, 46 zu einer Drallbildung des Kraftstoffs führt, führt der treppenförmige Nutverlauf zu einer erhöhten Verwirbelung des Kraftstoffs durch permanente Richtungsänderung der Nuten 55, 56.

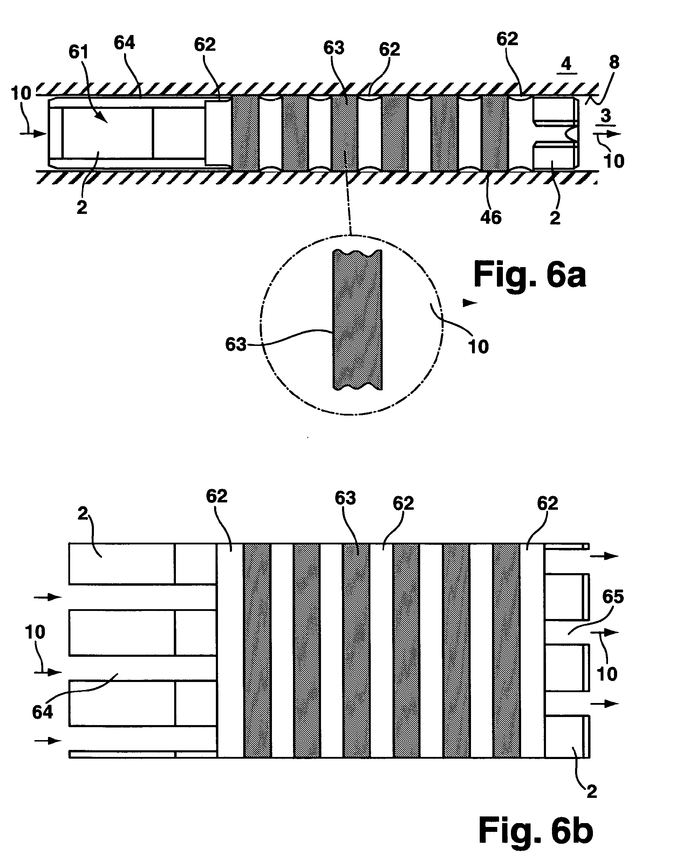

Der in **Fig. 6** gezeigte Stabfilter **61** weist mehrere Umfangs- bzw. Ringnuten **62** auf, die jeweils durch einen ringförmigen, strukturierten Oberflächenabschnitt **63** voneinander getrennt sind. Von der linken Stirnfläche des Stabfilters 61 führen Längsnuten (Zuströmnuten) **64** bis zur äußersten linken Ringnut 62, während von der äußersten rechten Ringnut 62 Längsnuten (Abströmnuten) **65** bis zur rechten Stirnfläche des Stabfilters 61 führen. Der Kraftstoff muss von einer Ringnut 62 zur nächsten Ringnut 62 durch den dazwischen liegenden Ringspalt **66** hindurchströmen, der zwischen dem strukturierten Oberflächenabschnitt 63 des Stabfilters 1 und der Bohrungswand 8 vorhanden ist.

## Patentansprüche

1. Filteranordnung eines Kraftstoffeinspritzsystems für Brennkraftmaschinen, mit einem in einem Kraftstoff-Zufuhrkanal (3) angeordneten Stabfilter (1; 41; 51), der zwei Gruppen von axial einseitig offenen Nuten (5, 6; 45, 46; 55, 56) aufweist, die voneinander jeweils durch einen dazwischen befindlichen oberflächenstrukturierten Mantelflächenabschnitt (9; 49; 59) getrennt sind, der zusammen mit der Kanalwand (8) einen Filterspalt (7) definiert, wobei die Nuten (5; 45; 55) der einen Gruppe von der einen Stirnfläche des Stabfilters (1; 41; 51) und die Nuten (6; 46; 56) der anderen Gruppe von der anderen Stirnfläche des Stabfilters (1; 41; 51) ausgehen,
**dadurch gekennzeichnet,**
**dass** die Oberflächenstrukturierung der Mantelflächenabschnitte (9; 49; 59) durch ein Rändel (11, 12, 13, 14) gebildet ist.

2. Filteranordnung nach Anspruch 1, **dadurch gekennzeichnet, dass** die Nuten (5, 6) axiale Längsnuten sind.

3. Filteranordnung nach Anspruch 1, **dadurch gekennzeichnet, dass** die Nuten (45, 46; 55, 56) zur Längsrichtung des Stabfilters (1; 41; 51) wendelförmig oder treppenförmig verlaufen.

4. Filteranordnung nach einem der vorhergehenden Ansprüche, **dadurch gekennzeichnet, dass** die Nuten (5, 6; 45, 46; 55, 56) der ersten und der zweiten Gruppe abwechselnd über den Umfang des Stabfilters (1; 41; 51) verteilt sind.

5. Filteranordnung eines Kraftstoffeinspritzsystems für Brennkraftmaschinen, mit einem in einem Kraftstoff-Zufuhrkanal (3) angeordneten Stabfilter (61), der mehrere Nuten (62) aufweist, die voneinander jeweils durch einen dazwischen befindlichen oberflächenstrukturierten Mantelflächenabschnitt (63) getrennt sind, der zusammen mit der Kanalwand (8) einen Filterspalt (7) definiert,
**dadurch gekennzeichnet,**
**dass** die Nuten als Ringnuten (62) ausgebildet sind, die jeweils durch einen ringförmigen oberflächenstrukturierten Mantelflächenabschnitt (63) voneinander getrennt sind, und dass der oberflächenstrukturierte Mantelflächenabschnitt (63) durch ein Rändel (11, 12, 13, 14) gebildet ist.

6. Filteranordnung nach einem der vorhergehenden Ansprüche, **dadurch gekennzeichnet, dass** der strukturierte Oberflächenabschnitt (9; 49; 59; 63) auf die Manteloberfläche des Stabfilters (1; 41; 51; 61) aufgeprägt ist.

## Claims

1. Filter arrangement of a fuel injection system for internal combustion engines, with a stick filter (1; 41; 51) which is arranged in a fuel supply duct (3) and which has two groups of grooves (5, 6; 45, 46; 55, 56) open axially on one side, which are in each case separated from one another by a surface-structured surface-area portion (9; 49; 59) which is located between them and which together with the duct wall (8) defines a filter gap (7), the grooves (5; 45; 55) of one group emanating from one end face of the stick filter (1; 41; 51) and the grooves (6; 46; 56) of the other group emanating from the other end face of the stick filter (1; 41; 51), **characterized in that** the surface structuring of the surface-area portions (9; 49; 59) is formed by a knurl (11, 12, 13, 14).

2. Filter arrangement according to Claim 1,
**characterized in that** the grooves (5, 6) are axial longitudinal grooves.

3. Filter arrangement according to Claim 1,
**characterized in that** the grooves (45, 46; 55, 56) run in a helical or stepped manner with respect to the longitudinal direction of the stick filter (1; 41; 51).

4. Filter arrangement according to one of the preceding claims, **characterized in that** the grooves (5, 6; 45, 46; 55, 56) of the first and of the second group are distributed alternately over the circumference of the stick filter (1; 41; 51).

5. Filter arrangement of a fuel injection system for internal combustion engines, with a stick filter (61) which is arranged in a fuel supply duct (3) and which has a plurality of grooves (62) which are in each case separated from one another by a surface-structured surface-area portion (63) which is located between them and which together with the duct wall (8) defines a filter gap (7), **characterized in that** the grooves are designed as annular grooves (62) which are separated from one another in each case by an annular surface-structured surface-area portion (63), and **in that** the surface-structured surface-area portion (63) is formed by a knurl (11, 12, 13, 14).

6. Filter arrangement according to one of the preceding claims, **characterized in that** the structured surface portion (9; 49; 59; 63) is impressed onto the surface area of the stick filter (1; 41; 51; 61).

## Revendications

1. Dispositif de filtre pour un système d'injection de carburant destiné à des moteurs à combustion interne comportant un filtre-tige (1 ; 41 ; 51) installé dans un canal d'alimentation en carburant (3), ce filtre-tige ayant deux groupe de rainures (5, 6 ; 45, 46 ; 55, 56) ouvertes axialement d'un côté et séparées les unes des autres respectivement par un segment de surface-enveloppe (9 ; 49 ; 59) dont la surface intermédiaire est structurée, ce segment de surface-enveloppe définissant un intervalle de filtre (7) avec la paroi de canal (8),
les rainures (5 ; 45 ; 55) d'un groupe partent d'une surface frontale du filtre-tige (1 ; 41 ; 51) et les rainures (6 ; 46 ; 56) de l'autre groupe partent de l'autre surface frontale du filtre-tige (1 ; 41 ; 51),
**caractérisé en ce que**
la structure de la surface supérieure des segments de surface-enveloppe (9 ; 49 ; 59) est formée par un moletage (11, 12, 13, 14).

2. Dispositif de filtre selon la revendication 1,
**caractérisé en ce que**
les rainures (5, 6) sont des rainures axiales longitudinales.

3. Dispositif de filtre selon la revendication 1,
**caractérisé en ce que**
les rainures (45, 46 ; 55, 56) sont dirigées suivant un tracé ondulé ou en gradins par rapport à la direction longitudinale du filtre-tige (1 ; 41 ; 51).

4. Dispositif de filtre selon l'une des revendications précédentes,
**caractérisé en ce que**
les rainures (5, 6 ; 45, 46 ; 55, 56) du premier et du second groupe sont réparties en alternance à la périphérie du filtre-tige (1 ; 41 ; 51) .

5. Dispositif de filtre d'un système d'injection de carburant pour des moteurs à combustion interne comportant un filtre-tige (61) installé dans un canal d'alimentation en carburant (3), ce filtre-tige ayant plusieurs rainures (62) séparées les unes des autres chaque fois par un
segment de surface-enveloppe (63) intermédiaire, dont la surface supérieure est structurée, et il définit un intervalle de filtre (7) avec la paroi de canal (8),
**caractérisé en ce que**
les rainures sont des rainures annulaires (62) séparées respectivement les unes des autres par un segment de surface-enveloppe (3) annulaire, à surface supérieure structurée, et
le segment de surface-enveloppe (63) à surface supérieure structurée est constitué par un moletage (11, 12, 13, 14).

6. Dispositif de filtre selon l'une des revendications précédentes,
**caractérisé en ce que**
le segment de surface supérieure structurée (9 ; 49 ; 59 ; 63) est imprimé dans la surface-enveloppe du filtre-tige (1 ; 41; 51; 61) .
